# EUROPÄISCHE PATENTSCHRIFT

(11) **EP 2 886 587 B1**
(45) Veröffentlichungstag und Bekanntmachung des Hinweises auf die Patenterteilung: **21.06.2017**
(21) Anmeldenummer: 13199354.5
(22) Anmeldetag: 23.12.2013
(51) Int. Cl.: C08J 5/18, C08L 67/04

(54) **Elastische Folie**
Elastic film
Feuille élastique

(43) Veröffentlichungstag der Anmeldung: 24.06.2015
(73) Patentinhaber: Mondi Gronau GmbH, 48599 Gronau (DE)
(72) Erfinder: Sollmann, Henner, 48599 Gronau (DE); Baldauf, Georg, 48366 Laer (DE); Hawighorst, Joachim, 49124 Georgsmarienhütte (DE); Clasen, Hannes, 48143 Münster (DE)
(74) Vertreter: Lorenz, Bernd Ingo Thaddeus

(56) Entgegenhaltungen:
- US-A1- 2010 003 882

## Beschreibung

Die vorliegende Erfindung betrifft eine elastische Folie mit zumindest einer elastischen Folienschicht, welche aus einer Polymermischung gebildet ist und neben Styrol-Blockcopolymer als einer ersten Polymerkomponente A zumindest eine zweite Polymerkomponente B aufweist, wobei die zweite Polymerkomponente üblicherweise aus einem nicht-elastischen Kunststoff besteht. Die elastische Folie kann für eine Windel, insbesondere für elastische Windelverschlusselemente eingesetzt werden.

Die Styrol-Blockcopolymere weisen üblicherweise eine Molekülstruktur mit steifen, nicht-elastischen Endblöcken aus Polystyrolsträngen auf, wobei dazwischen zumindest ein weicher, elastischer Zwischenblock vorgesehen ist.

Elastische Folien bzw. zumindest eine darin vorgesehene elastische Folienschicht bestehen häufig aus kostengünstigen Mischungen aus einem oder mehreren Styrol-Blockcopolymeren, einem Weichmacheröl (Weißöl) und einem Polystyrol als Verarbeitungshilfsmittel bei der Folienextrusion.

Das Weißöl bzw. Weichmacheröl wird bei der Herstellung in der Regel bei einem ersten Prozessschritt dem Styrol-Blockcopolymer in einem Mischer zugegeben, um die Viskosität des Styrol-Blockcopolymers zu verringern und die nachfolgende Compoundierung zu erleichtern.

Das Polystyrol weist üblicherweise eine vergleichsweise gute Fließfähigkeit auf und kann damit den Schmelzfluss in einem Extruder und einer daran angeordneten Extrusionsdüse vereinfachen. Des Weiteren weist Polystyrol eine mittlere Polarität auf und ist damit sowohl zu dem Styrol-Blockcopolymer als auch zu optional vorgesehenen Polyolefinbestandteilen der elastischen Folie kompatibel. Polyolefinbestandteile können in gewissen Mengen innerhalb der elastischen Folienschicht oder vorzugsweise in angrenzenden Folienschichten vorhanden sein.

Üblicher Rohstoff für Kunststoffe ist Erdöl, welches im Markt knapper wird. Zudem führen die Förderung und Verarbeitung von Erdöl zu Risiken für die Umwelt und leisten einen Beitrag zur Klimaerwärmung. Aufgrund der Begrenztheit der zur Verfügung stehenden Ressourcen an fossilen Kohlenwasserstoffen und den sich damit ergebenden langfristigen Problemen bezüglich Versorgungssicherheit und steigenden Rohstoffkosten besteht das Bedürfnis, alternative Rohstoffquellen nutzbar zu machen.

Eine gattungsgemäße elastische Folie ist aus der EP 2 602 282 A1 bekannt. Zur Einsparung fossiler Rohstoffe wird vorgeschlagen, ein Weichmacheröl einzusetzen, welches zumindest zu 50 Gew.-% aus einem Pflanzenöl besteht. US 2010/003882 A1 offenbart eine Folie enthaltend eine Polymermischung enthaltend einen Styrol-Blockcopolymer sowie 4-30 Gew.% Polylactid.

Der vorliegenden Erfindung liegt die Aufgabe zugrunde, eine elastische Folie anzugeben, welche gegenüber bekannten Ausgestaltungen einen geringeren Anteil an fossilem Kohlenstoff enthält, ohne dass dadurch die mechanischen Eigenschaften der Folie beeinträchtigt werden.

Gegenstand der Erfindung und Lösung der Aufgabe ist eine elastische Folie gemäß Patentanspruch 1. Ausgehend von einer gattungsgemäßen elastischen Folie ist erfindungsgemäß vorgesehen, dass die zweite Polymerkomponente Polylactid ist und dass der Anteil der zweiten Polymerkomponente in der elastischen Folienschicht zwischen 4 Gew.-% und 40 Gew.-% beträgt.

Überraschenderweise ist das aus Milchsäuremolekülen aufgebaute technische Biopolymer Polylactid als Verarbeitungshilfsmittel und Zusatzstoff für eine elastische Folienschicht geeignet. Insbesondere kann Polylactid das typischerweise als Zusatzstoff vorgesehene Polystyrol ersetzen, so dass sich bei einem teilweisen oder vollständigen Austausch von Polystyrol durch Polylactid eine verbesserte CO₂-Bilanz sowie eine geringere Nutzung fossiler Rohstoffe ergibt.

Überraschenderweise sind auch die bei dem Einsatz von Polylactid als zweiter Polymerkomponente B resultierenden elastischen Eigenschaften der elastischen Folienschicht und der daraus gebildeten elastischen Folie im Vergleich zu Polystyrol als zweite Polymerkomponente nur geringfügig verändert. Es kann also bei einer ansonsten übereinstimmenden oder im Wesentlichen übereinstimmenden Rezeptur Polystyrol zum Teil oder vollständig durch Polylactid ersetzt werden, ohne dass weitere Anpassungen notwendig sind.

Der Anteil an Polylactid als zweiter Polymerkomponente B in der elastischen Folienschicht beträgt vorzugsweise zwischen 5 Gew.-% und 20 Gew.-%, insbesondere wenn die Folie in der elastischen Folienschicht kein Polystyrol als nicht-elastische Beimischung aufweist.

Wie üblich kann die elastische Folie ein Weichmacheröl, also ein Weißöl, enthalten. Das Weichmacheröl ist typischerweise mit einem Anteil zwischen 5 Gew.-% und 20 Gew.-%, insbesondere 10 Gew.-% bis 20 Gew.-% in der elastischen Schicht enthalten, wobei herkömmliche Weißöle auf Mineralölbasis in Betracht kommen.

Um jedoch den Anteil an fossilen Rohstoffen weiter zu verringern, kann zumindest ein Teil des Weichmacheröls oder auch das gesamte Weichmacheröl von einem Pflanzenöl gebildet sein. Entsprechende Pflanzenöle, die auch im Rahmen der Erfindung ohne Weiteres einsetzbar sind, sind aus der EP 2 602 828 A1 bekannt.

Darüber hinaus kann zumindest ein Teil des Weichmacheröls auch als synthetisches Öl aus Synthesegas gebildet werden. Entsprechende Öle werden gemäß ihrer Herstellung aus gasförmigen Edukten auch als GtL-Öle ("Gas to Liquide") bezeichnet. Ausgangsstoff für solche Öle ist Synthesegas, also ein Gasgemisch aus Wasserstoff (H₂) und Kohlenmonoxid (CO), welches insbesondere aus Erdgas gebildet wird. Das Synthesegas wird dann zu langkettigen aliphatischen Kohlenwasserstoffen umgesetzt, welche als Weißöl bzw. Weichmacheröl eingesetzt werden können. Die so gebildeten Öle zeichnen sich durch eine besonders hohe Qualität aus. Insbesondere sind die gewonnenen Öle farb- und geruchslos, frei von Schwefel, Stickstoff sowie Aromaten und weisen eine geringe Verdampfungsneigung und damit geringe Emissionen auf. GtL-Öle weisen eine gute UV-Stabilität sowie auch eine gute Oxidationsstabilität auf.

Bei der Gewinnung aus Erdgas verleibt aber der Nachteil, dass auf fossile Rohstoffe zurückgegriffen werden muss.

Als Alternative ist es bekannt, Synthesegas ohne fossile Rohstoffe, nämlich durch die Hydrolyse von Wasserstoff mittels Strom zu bilden. Der so gebildete Wasserstoff (H₂) wird mit Kohlendioxid (CO₂) zu Synthesegas umgesetzt, welches in der beschriebenen Weise zu langkettigen aliphatischen Kohlenwasserstoffen umgewandelt werden kann. Insbesondere kann auch ein regenerativ erzeugter Strom eingesetzt werden, um eine Unabhängigkeit von fossilen Rohstoffen zu erreichen. Gegebenenfalls kann die Wasserstoffproduktion auch abhängig von der Verfügbarkeit von Strom bzw. einem entsprechend ermittelten Strompreis erfolgen.

Wie bereits eingangs erläutert, ist die elastische Folie insbesondere für die Herstellung von elastischen Elementen an Hygieneprodukten, insbesondere Windeln, vorgesehen. Für diesen Anwendungszweck beträgt die Gesamtdicke der elastischen Folie vorzugsweise zwischen 20 µm und 120 µm.

Die elastische Folie kann sowohl als Monofolie oder als mehrschichtige Folie ausgeführt sein. Bei einer Monofolie ergibt sich jedoch die Einschränkung, dass diese nicht ohne Weiteres aufgerollt und gelagert werden kann, weil diese dann aufgrund der Klebrigkeit des elastischen Styrol-Blockcopolymers zu einem Verblocken, das heißt zu einem Verkleben der in einem aufgerollten Zustand aufeinander liegenden Lagen, neigt.

Bei der Herstellung einer Monofolie sind also entsprechende entblockende Maßnahmen vorzusehen, wenn die Monofolie vor ihrer weiteren Verarbeitung aufgerollt werden soll. Die Monofolie kann beispielsweise auf einer Seite mit einem Puder oder einer anderen Trennschicht, beispielsweise einem Nonwoven, versehen sein. Neben einem anorganischen Puder kommen auch organische Puder in Betracht, welche dann bei einem nachfolgenden Verkleben der Monofolie mit einer Deckschicht aufschmelzen und somit die Verklebung nicht oder nur geringfügig beeinträchtigen.

Gemäß einer bevorzugten Ausgestaltung der Erfindung kann die elastische Folienschicht mit zumindest einer weiteren Folienschicht, insbesondere einer nicht-elastischen Deckschicht coextrudiert werden. Die nicht-elastische Deckschicht ermöglicht dann als Trennlage auch ohne Weiteres ein Aufrollen der elastischen Folienschicht.

Grundsätzlich ist zu beachten, dass die Dehnungseigenschaften durch die zumindest eine nicht-elastische Deckschicht in einem gewissen Maße beeinträchtigt sein können. Dies ist insbesondere dann der Fall, wenn die elastische Folie unmittelbar nach der Herstellung ein erstes Mal gedehnt werden soll. Bei einer solchen Dehnung muss die nicht-elastische Deckschicht plastisch verformt und/oder abschnittsweise zerrissen werden. Bei einem Wegfall der Zugkraft bewirkt jedoch die elastische Folienschicht eine Rückstellung, so dass dann nach einer erstmaligen Dehnung die Deckschicht das elastische Verhalten der elastischen Folie nicht oder nur geringfügig beeinflusst, insbesondere wenn die elastische Deckschicht dünn ausgeführt ist. Die Dicke der nicht-elastischen Deckschicht kann beispielsweise zwischen 2 µm und 20 µm betragen.

Im Rahmen der Erfindung kann insbesondere ein symmetrischer, dreischichtiger Aufbau der elastischen Folie vorgesehen sein, wobei die elastische Folienschicht als Kernschicht zwischen zwei nicht-elastischen Deckschichten angeordnet ist. Als Material für die Deckschichten kommen insbesondere Polyolefine wie Polyethylen und Polypropylen in Betracht, welche insbesondere auch in einer Mischung vorliegen können.

Die Dicke der elastischen Folienschicht beträgt bevorzugt zwischen 20 µm und 80 µm unabhängig davon, ob die elastische Folienschicht alleine eine Monofolie bildet oder als Kernschicht bei einer Coextrusionsfolie neben zumindest einer Deckschicht angeordnet ist.

Gemäß einer bevorzugten Ausgestaltung der Erfindung ist die gesamte elastische Folie zu zumindest 20 Gew.-% aus nachwachsenden Rohstoffen gebildet. Der Anteil kann sogar noch weiter erhöht werden, wenn nicht nur Polylactid als zweite Polymerkomponente B, sondern auch ein Weichmacheröl auf der Basis von Pflanzenöl eingesetzt werden.

Als Styrol-Blockcopolymer kommen insbesondere Styrol-Butadien-Styrol-Blockcopolymer, Styrol-Isopren-Styrol-Blockcopolymer und Styrol-Ethen-Butadien-Styrol-Blockcopolymer in Betracht.

Üblicherweise ist das Styrol-Blockcopolymer der Hauptbestandteil der elastischen Folienschicht. Insbesondere kann die elastische Folienschicht aus der Polymerkomponente A der Polymerkomponente B und Rest Weichmacheröl bestehen. Alternativ können aber auch weitere Zusatzstoffe, Verarbeitungshilfsmittel oder dergleichen in der elastischen Folienschicht in üblichen Mengen vorgesehen sein. Mögliche Zusatzstoffe sind beispielsweise mineralische Füllstoffe, Farbpigmente, Stabilisatoren, Bearbeitungshilfsmittel oder Geruchsabsorber.

Das Polylactid welches auch als Polymilchsäure bezeichnet wird, kann aus stärkehaltigen bzw. zuckerhaltigen Pflanzen wie Mais oder Zuckerrohr gewonnen werden. Stärke bzw. Zucker wird durch Hydrolyse und/oder durch Fermentation in Milchsäure umgesetzt. Dabei entsteht eine Mischung aus D-Lactiden und L-Lactiden.

Die Milchsäure wird dann durch Ringöffnungs- oder Kondensationspolymerisation zu Polymilchsäure (Polylactid PLA) umgesetzt. Polylactid wird beispielsweise von der NatureWorks LLC unter dem Markennamen Ingeo® vertrieben.

Polylactid weist eine hohe Polarität auf und ist gegenüber den üblichen Weißölen einschließlich Weißölen auf der Basis von Pflanzenöl sowie Weißöle auf der Basis von synthetischen Ölen aus Synthesegas ausreichend beständig. Aufgrund der hohen Polarität wird Polylactid bei der Verarbeitung in dem Extruder von dem Weißöl bzw. Weichmacheröl kaum beeinflusst und kann seine prozessverbessernden Eigenschaften bei der Compoundierung und der Folienextrusion beibehalten.

Um eine Verbesserung der Fließfähigkeit zu erzielen, werden bevorzugt Polylactid-Typen mit einer Schmelzflussrate MFR gemäß ASTM 1238 von größer 10, bevorzugt größer 30 eingesetzt, wobei die Schmelzflussrate bei einer Temperatur von 210 °C und einem Probegewicht von 2,16 kg zu bestimmen ist.

Bei der Herstellung der elastischen Folie kann in dem Extruder optional auch eine Entgasung der Polymermischung für die zumindest eine elastische Folienschicht vorgesehen sein. Eine solche Entgasung kann beispielsweise mit einem Schleppmittel, insbesondere CO₂ erfolgen. Ähnlich wie Polystyrol ist bei Produkten, welche Polylactid enthalten, häufig ein spezifischer, wenn auch von Polystyrol abweichender Geruch festzustellen, der als störend empfunden werden kann. Durch die Entgasung kann also auch im Rahmen der vorliegenden Erfindung eine Reduzierung des Geruchs der elastischen Folie erreicht werden. Insbesondere können auch Styrol-Monomere aus dem Styrol-Blockcopolymer entfernt werden.

Unter dem Gesichtspunkt der Vermeidung einer Geruchsbelästigung ist bei der Herstellung von Polylactid die zuvor erwähnte Ringöffnungspolymerisation bevorzugt, weil dabei keine niedermolekularen Bestandteile verbleiben und keine organische Lösungsmittel für die Polymerisationsreaktion benötigt werden.

Über den Anteil von D-Lactiden im Verhältnis L-Lactiden können verschiedene Eigenschaften des Polylactids wie die Kristallinität, der Glasübergangspunkt, die thermische Beständigkeit und die mechanischen Kennwerte beeinflusst werden. Da das Polylactid gemäß der vorliegenden Erfindung ohnehin in einer Mischung mit Styrol-Blockcopolymer vorliegt, sind die genannten Eigenschaften von untergeordneter Bedeutung. Bevorzugt kann deshalb ein vergleichsweise kostengünstiges Polylactid mit einem D-Lactid-Anteil von 3 bis 10 % eingesetzt werden.

Wie allgemein bei der Verarbeitung von Styrol-Blockcopolymeren, soll die Temperaturbelastung bei der Herstellung möglichst gering gehalten werden, um den Zerfall der Polymere zu niedermolekularen Bestandteilen zu vermeiden, welche in einem besonderen Maße für eine charakteristischen Geruch verantwortlich sein können.

Gegenstand der Erfindung ist auch ein Verfahren zur Herstellung der zuvor beschriebenen elastischen Folie gemäß Patentanspruch 12. Die elastische Folie weist, wie zuvor beschrieben, zumindest eine elastische Folienschicht auf, wobei zur Bildung einer Polymerschmelze für die elastische Folienschicht Styrol-Blockcopolymer als erste Polymerkomponente A und Polylactid mit einem Anteil von 4 Gew.-% bis 40 Gew.-% als Polymerkomponente B gemischt werden und wobei nachfolgend die elastische Folienschicht durch Extrusion der Polymerschmelze gebildet wird.

Dabei ist es möglich, dass die elastische Folienschicht entweder als einzige Schicht extrudiert wird, so dass dann die elastische Folie aus der elastischen Folienschicht besteht. Darüber hinaus kann die elastische Folienschicht aber auch im Wege der Coextrusion mit weiteren Folienschichten erzeugt werden.

Insbesondere kann dabei vorgesehen sein, dass das Weichmacheröl zumindest zum Teil aus einem synthetischen Öl besteht, welches aus Synthesegas gebildet ist. Das Synthesegas kann dabei auch mit Wasserstoff gebildet werden, welches durch Hydrolyse mittels regenerativ erzeugtem Strom hergestellt wird. Der Strom kann beispielsweise durch Sonnenenergie mittels Photovoltaik oder Solarthermie, Windkraft sowie Wasserkraft gewonnen werden. Darüber hinaus kommen aber auch andere alternative Energiequellen wie beispielsweise die Verstromung von Biogas in Betracht. Biogas kann grundsätzlich auch in Anlehnung an ein klassisches Verfahren zur Herstellung von Synthesegas anstelle von Erdgas eingesetzt werden.

## Patentansprüche

1. Elastische Folie mit zumindest einer elastischen Folienschicht, welche aus einer Polymermischung gebildet ist und neben Styrol-Blockcopolymer als einer ersten Polymerkomponente A zumindest eine zweite Polymerkomponente B aufweist, **dadurch gekennzeichnet, dass** die zweite Polymerkomponente B Polylactid (PLA) ist und dass der Anteil der zweiten Polymerkomponente B in der elastischen Folie zwischen 4 Gew.-% und 40 Gew.-% beträgt.

2. Elastische Folie nach Anspruch 1, **dadurch gekennzeichnet, dass** der Anteil der zweiten Polymerkomponente B in der elastischen Folienschicht zwischen 5 Gew.-% und 20 Gew.-% beträgt.

3. Elastische Folie nach Anspruch 1 oder 2, **dadurch gekennzeichnet, dass** die elastische Folienschicht ein Weichmacheröl enthält.

4. Elastische Folie nach Anspruch 3, **dadurch gekennzeichnet, dass** die elastische Folienschicht aus der Polymerkomponente A, der Polymerkomponente B und Rest Weichmacheröl besteht.

5. Elastische Folie nach Anspruch 3 oder 4, **dadurch gekennzeichnet, dass** das Weichmacheröl mit einem Anteil zwischen 5 Gew.-% und 20 Gew.-% in der elastischen Schicht enthalten ist.

6. Elastische Folie nach einem der Ansprüche 3 bis 5, **dadurch gekennzeichnet, dass** zumindest ein Teil des Weichmacheröls von einem Pflanzenöl gebildet ist.

7. Elastische Folie nach einem der Ansprüche 1 bis 6, **dadurch gekennzeichnet, dass** die Gesamtdicke zwischen 20 µm und 120 µm beträgt.

8. Elastische Folie nach einem der Ansprüche 1 bis 7, **dadurch gekennzeichnet, dass** die Dicke der elastischen Folienschicht zwischen 20 µm und 80 µm liegt.

9. Elastische Folie nach einem der Ansprüche 1 bis 8, **dadurch gekennzeichnet, dass** die elastische Folienschicht mit zumindest einer nicht-elastischen Deckschicht coextrudiert ist, wobei die Dicke der nicht-elastischen Deckschicht zwischen 2 µm und 20 µm beträgt.

10. Elastische Folie nach einem der Ansprüche 1 bis 9, **dadurch gekennzeichnet, dass** die gesamte elastische Folie zu zumindest 20 Gew.-% aus nachwachsenden Rohstoffen gebildet ist.

11. Elastische Folie nach einem der Ansprüche 1 bis 10, **dadurch gekennzeichnet, dass** die zweite Polymerkomponente B eine Schmelzflussrate MFR gemäß ASTM 1238 bei 210 °C/2,16 kg von mehr als 10 aufweist.

12. Verfahren zur Herstellung einer elastischen Folie mit zumindest einer elastischen Folienschicht, wobei zur Bildung einer Polymerschmelze für die elastische Folienschicht Styrol-Blockcopolymer als erste Polymerkomponente A und Polylactid mit einem Anteil von 4 Gew.-% bis 40 Gew.-% als Polymerkomponente B gemischt werden und wobei nachfolgend die elastische Folienschicht durch Extrusion der Polymerschmelze gebildet wird.

13. Verfahren nach Anspruch 12, wobei zur Bildung der Polymerschmelze für die elastische Folienschicht ein Weichmacheröl zugegeben wird, wobei zumindest ein Teil des Weichmacheröls zuvor als synthetisches Öl aus Synthesegas gebildet wird und wobei das Synthesegas mit Wasserstoff gebildet wird, welches durch Hydrolyse mittels regenerativ erzeugtem Strom hergestellt wird.

## Claims

1. An elastic film comprising at least one elastic film layer which is formed from a polymer mixture and in addition to a styrene block copolymer as a first polymer component A, comprises at least one second polymer component B, **characterized in that** the second polymer component B is polylactide (PLA) and that the fraction of the second polymer component B in the elastic film is between 4 wt.% and 40 wt.%.

2. The elastic film according to claim 1, **characterized in that** the fraction of the second polymer component B in the elastic film layer is between 5 wt.% and 20 wt.%.

3. The elastic film according to claim 1 or 2, **characterized in that** the elastic film layer contains a softener oil.

4. The elastic film according to claim 3, **characterized in that** the elastic film layer consists of a polymer component A, the polymer component B and the remainder softener oil.

5. The elastic film according to claim 3 or 4, **characterized in that** the softener oil is contained in the elastic layer with a fraction between 5 wt.% and 20 wt.%.

6. The elastic film according to any one of claims 3 to 5, **characterized in that** at least a part of the softener oil is formed from plant oil.

7. The elastic film according to any one of claims 1 to 6, **characterized in that** the total thickness is between 20 µm and 120 µm.

8. The elastic film according to any one of claims 1 to 7, **characterized in that** the thickness of the elastic film layer is between 20 µm and 80 µm.

9. The elastic film according to any one of claims 1 to 8, **characterized in that** the elastic film layer is coextruded with at least one non-elastic cover layer, wherein the thickness of the non-elastic cover layer is between 2 µm and 20 µm.

10. The elastic film according to any one of claims 1 to 9, **characterized in that** the total elastic film is formed from at least 20 wt.% of renewable raw materials.

11. The elastic film according to any one of claims 1 to 10, **characterized in that** the second polymer component B has a melt flow rate MFR according to ASTM 1238 at 210 °C/2.16 kg of more than 10.

12. Method for producing an elastic film comprising at least one elastic film layer, wherein in order to form a polymer melt for the elastic film layer, styrene block copolymer as first polymer component A and polylactide with a fraction of 4 wt.% to 40 wt.% as polymer component B are mixed and wherein subsequently the elastic film layer is formed by extrusion of the polymer melt.

13. The method according to claim 12, wherein in order to form the polymer melt for the elastic film layer, a softener oil is added wherein at least a part of the softener oil is formed previously as synthetic oil from synthesis gas and wherein the synthesis gas is formed with hydrogen which is produced by hydrolysis by means of regeneratively produced current.

## Revendications

1. Film élastique comprenant au moins une couche de film élastique qui est formée d'un mélange de polymères, et présente, outre du styrène copolymère bloc en tant qu'une première composante de polymère A, au moins une seconde composante de polymère B, **caractérisé en ce que** la seconde composante de polymère B est du polylactide (PLA) et que la teneur de la seconde composante de polymère B dans le film élastique est située entre 4 % en poids et 40 % en poids.

2. Film élastique selon la revendication 1, **caractérisé en ce que** la teneur de la seconde composante de polymère B dans la couche de film élastique est située entre 5 % en poids et 20 % en poids.

3. Film élastique selon la revendication 1 ou 2, **caractérisé en ce que** la couche de film élastique contient une huile plastifiante.

4. Film élastique selon la revendication 3, **caractérisé en ce que** la couche de film élastique est composée de la composante de polymère A, de la composante de polymère B et du reste d'huile plastifiante.

5. Film élastique selon la revendication 3 ou 4, **caractérisé en ce que** l'huile plastifiante est contenue dans la couche élastique avec une teneur entre 5 % en poids et 20 % en poids.

6. Film élastique selon l'une des revendications 3 à 5, **caractérisé en ce qu'**au moins une partie de l'huile plastifiante est formée par une huile végétale.

7. Film élastique selon l'une des revendications 1 à 6, **caractérisé en ce que** l'épaisseur totale est située entre 20 µm et 120 µm.

8. Film élastique selon l'une des revendications 1 à 7, **caractérisé en ce que** l'épaisseur de la couche de film élastique est située entre 20 µm et 80 µm.

9. Film élastique selon l'une des revendications 1 à 8, **caractérisé en ce que** la couche de film élastique est co-extrudée avec au moins une couche de couverture non-élastique, dans lequel l'épaisseur de la couche de couverture non-élastique est située entre 2 µm et 20 µm.

10. Film élastique selon l'une des revendications 1 à 9, **caractérisé en ce que** la totalité de la couche élastique est formée à au moins 20 % en poids de matières brutes renouvelables.

11. Film élastique selon l'une des revendications 1 à 10, **caractérisé en ce que** la seconde composante de polymère B présente un indice de fusion MFR selon l'ASTM 1238 à 210 °C/2,16 kg de plus de 10.

12. Procédé de fabrication d'un film élastique comprenant au moins une couche de film élastique, dans lequel pour former une fonte de polymère pour la couche de film élastique, du styrène copolymère bloc en tant que première composante de polymère A et du polylactide avec une teneur de 4 % en poids à 40 % en poids en tant que seconde composante de polymère B sont mélangés et dans lequel ensuite, la couche de film élastique est formée par extrusion de la fonte de polymère.

13. Procédé selon la revendication 12, dans lequel pour former la fonte de polymère pour la couche de film élastique, une huile plastifiante est ajoutée, dans lequel au moins une partie de l'huile plastifiante est formée au préalable en tant qu'huile synthétique à partir de gaz de synthèse et dans lequel le gaz de synthèse est formé avec de l'hydrogène, lequel est fabriqué par hydrolyse au moyen de courant produit de façon régénérative.
